# EUROPÄISCHE PATENTSCHRIFT

(11) **EP 3 426 432 B1**
(45) Veröffentlichungstag und Bekanntmachung des Hinweises auf die Patenterteilung: **30.12.2020**
(21) Anmeldenummer: 16710415.7
(22) Anmeldetag: 11.03.2016
(51) Int. Cl.: B23P 6/00, B24B 21/16, B24B 19/14, F01D 5/00, B23C 3/18, B23Q 9/00

(54) **VORRICHTUNG UND VERFAHREN ZUM REKONTURIEREN EINER GASTURBINENSCHAUFEL**
DEVICE AND METHOD FOR RE-CONTOURING A GAS TURBINE BLADE
DISPOSITIF ET PROCÉDÉ DE CORRECTION DE CONTOURS D'UNE AUBE DE TURBINE À GAZ

(43) Veröffentlichungstag der Anmeldung: 16.01.2019
(73) Patentinhaber: Lufthansa Technik AG, 22335 Hamburg (DE)
(72) Erfinder: PETERS, Jan, Oke, 22339 Hamburg (DE); GARTNER, Thomas, 22087 Hamburg (DE); SCHÖN, Joachim, 25469 Halstenbek (DE); KUNTZAGK, Stefan, 22459 Hamburg (DE)
(74) Vertreter: Müller Verweyen
(86) Internationale Anmeldenummer: PCT/EP2016/055300
(87) Internationale Veröffentlichungsnummer: WO 2017/152995

(56) Entgegenhaltungen:
- EP-A2- 1 410 873
- DE-A1-102011 089 701
- DE-A1-102011 102 543
- DE-A1-102014 224 920
- JP-A- H10 148 766
- RU-C2- 2 198 778
- US-A1- 2009 269 206
- US-B1- 6 302 625

## Beschreibung

Die Erfindung betrifft ein Verfahren zum Rekonturieren einer Gasturbinenschaufel.

Bauteile in Gasturbinen, insbesondere in Flugzeugtriebwerken, unterliegen im Betrieb einem durch erosive Partikel, beispielsweise durch Sand oder Staub, verursachten Verschleiß. Im vorderen Teil der Gasturbine, dem Bereich des Kompressors, führt Erosion in der Regel zu einer Abflachung der Strömungseintrittskanten (Leading Edges) oder Aufrauhung der Kompressorschaufeln. Von dieser erosiven Beanspruchung ist insbesondere die erste Stufe des Kompressors (Stage 1 HPC Blade) betroffen, jedoch auch alle anderen Leit- und Laufschaufeln des Kompressors. Die Kompressorschaufeln haben in ihrer unverschlissenen Form ein aerodynamisch optimiertes Profil, welches durch den Verschleiß nachteilig verändert wird. Als Konsequenz einer solchen Verschlechterung des aerodynamischen Profils verliert die Gasturbine an Effizienz, d.h. der schubspezifische Kraftstoffverbrauch (Specific Fuel Consumption, SFC) steigt. Aus wirtschaftlicher Sicht ist es daher erstrebenswert, dem Verschleiß von Kompressorschaufeln, insbesondere einer Verschlechterung von aerodynamisch optimierten Schaufelgeometrien, entgegenzuwirken. Zu diesem Zweck haben sich Reparaturverfahren etabliert, die darauf abzielen, beschädigte Kompressorschaufeln wieder mit möglichst aerodynamisch optimalen Geometrien zu versehen.

Die Druckschrift DE 10 2010 036 042 B3 offenbart ein Verfahren zum Rekonturieren einer Kompressor- oder Turbinenschaufel für eine Gasturbine. Bei diesem Verfahren wird ein Teilbereich der Kompressor- oder Turbinenschaufel durch einen Energiestrahl, der beispielsweise durch einen Laserstrahl gebildet wird, gezielt aufgeschmolzen, so dass der Werkstoff ohne Zugabe von zusätzlichem Werkstoff zu einer vorgegebenen Neukontur erstarrt.

Der Druckschrift DE 10 2011 102 543 A1, welche den nächstliegenden Stand der Technik darstellt, ist eine Vorrichtung zu entnehmen, mit der die Rekonturierung der Gasturbinenschaufel auch im eingebauten Zustand vorgenommen werden kann. Hierzu wird ein spanendes Werkzeug verwendet, das durch eine Führungsvorrichtung entlang einer zu rekonturierenden Eintrittskante der Gasturbinenschaufel bewegt wird. Ferner wird über die Führungsvorrichtung die Eingriffstiefe und damit die Menge des Materialabtrags festgelegt. Des Weiteren umfasst die Vorrichtung eine Kamera, über die die Rekonturierung der Gasturbinenschaufel überwacht werden kann. Bei der hier vorgeschlagenen Lösung erfolgt der Materialabtrag durch eine Rotationsbewegung eines spanenden Werkzeugs um eine Rotationsache, wobei die Rotationsachse im Wesentlichen senkrecht zu der axialen Erstreckung einer Profilsehne der Gasturbinenschaufel und in Umfangsrichtung der Gasturbine ausgerichtet ist. Eine solche Ausrichtung der Rotationsachse des spanenden Werkzeugs ist auch in der Druckschrift US 6,302,625 B1 offenbart.

Weiter wird in der Druckschrift DE 691 24 224 T2 ein Bearbeitungswerkzeug offenbart, das dazu dient, eine Gasturbinenschaufel im eingebauten Zustand spanend zu bearbeiten. Es kann hierbei ein sich rotierendes spanendes Werkzeug durch die Vorrichtung in einer Raumrichtung senkrecht zu der Rotationsachse des spanenden Werkzeugs in linearer Richtung bewegt werden. Es können so Vertiefungen an der Eintrittskante durch Materialabtrag beseitigt werden. Nachteilig an dieser Lösung ist jedoch, dass für eine Rekonturierung im Übergangsbereich zu der Druckseite und der Saugseite eine Rotationsbewegung des gesamten Bearbeitungswerkzeugs notwendig ist.

Aus der Druckschrift DE 10 2011 089 701 A1 ist eine weitere Vorrichtung zum Rekonturieren von Gasturbinen bekannt. Hierbei ist ein Lagersystem offenbart, mit dem das spanende Werkzeug entlang einer Oberfläche der Gasturbinenschaufel bewegt werden kann. Es wird vorgeschlagen, dass mindestens ein Auflager an einer Seitenkante anliegt und mindestens ein weiteres Seitenlager an der Druck- und/oder Saugseite der Gasturbinenschaufel anliegt.

Aus der EP 2 530 242 A2 ist eine Vorrichtung zum Rekonturieren einer Gasturbinenschaufel bekannt, wobei als Werkzeug eine Bürste verwendet wird, die um eine Achse rotierbar ist.

Der Erfindung liegt die Aufgabe zugrunde, ein Verfahren bereitzustellen, mit dem das Rekonturieren von Gasturbinenschaufeln im eingebauten Zustand verbessert werden kann.

Die Aufgabe wird durch die Merkmale der unabhängigen Ansprüche gelöst.

Gemäß dem Grundgedanken der Erfindung wird ein Verfahren zum Rekonturieren einer Gasturbinenschaufel vorgeschlagen, wobei eine Vorrichtung, umfassend eine Haltevorrichtung mit wenigstens einem spanenden Werkzeug, und eine Führungsvorrichtung zur Führung des spanenden Werkzeugs entlang einer Eintrittskante der Gasturbinenschaufel, zum Rekonturieren verwendet wird, wobei das spanende Werkzeug durch eine Rotationsbewegung um eine Rotationsachse Material von der Gasturbinenschaufel abträgt, wobei die Rotationsachse mit einer Profilsehne der Gasturbinenschaufel in einer Profilschnittebene, die senkrecht zu einer radialen Erstreckung der Gasturbinenschaufel verläuft, einen Winkel einschließt, wobei der Winkel kleiner als 45° ist, und das spanende Werkzeug durch einen Radienfräser, einen Radienschleifkörper, einen Konturfräser oder einen Kontourschleifkörper gebildet ist.

Unter der Profilsehne ist die direkte Verbindungslinie zwischen einer vorderen Kante, also der Eintrittskante, und einer hinteren Kante der Gasturbinenschaufel in einer Ebene senkrecht zu einer radialen Erstreckung der Gasturbinenschaufel, also in der Profilschnittebene, zu verstehen.

Durch die erfindungsgemäße Ausrichtung der Rotationsachse zu der Profilsehne wird eine besonders vorteilhafte Positionierung des spanenden Werkzeugs im Bezug zu der zu bearbeitenden Gasturbinenschaufel ermöglicht. Diese Ausrichtung ermöglicht neben der Rekonturierung der eigentlichen Eintrittskante auch eine einfache Bearbeitung der Druckseite und/oder der Saugseite der Gasturbinenschaufel. Vorzugsweise wird so durch das spanende Werkzeug der gesamte vordere Teilbereich der Druck- und/oder Saugseite, der an die Eintrittskante angrenzt, bearbeitet, wobei die Länge der Profilsehne durch die Bearbeitung vorzugsweise nicht verkürzt wird. Der in den Luftmassenstrom gerichtete vordere Bereich der Gasturbinenschaufel kann durch die Verwendung der erfindungsgemäßen Vorrichtung eine neue Soll-Geometrie annehmen. Es können so die durch die erosive Beanspruchung hervorgerufenen Strömungsverluste reduziert werden und somit der schubspezifische Treibstoffverbrauch reduziert werden.

Durch einen Winkel zwischen der Rotationsachse und der Profilsehne in der Profilschnittebene von weniger als 45° wird insbesondere erreicht, dass sich die Vorrichtung während des Rekonturierens an der Druck- und/oder Saugseite abstützen kann. Ferner ergibt sich der Vorteil, dass die Vorrichtung zwischen den Gasturbinenschaufeln in Radialrichtung im eingebauten Zustand entlang der gesamten Eintrittskante bewegt werden kann. Vorzugsweise kann der Winkel auch kleiner als 30°, weiter vorzugsweise kleiner oder gleich 25° sein.

Es wird weiter vorgeschlagen, dass die Rotationsachse orthogonal zu der Eintrittskante ausgerichtet ist. Unter einer orthogonalen Ausrichtung im Sinne der Erfindung sind dabei auch Winkel zwischen der Rotationsachse und der Eintrittskante zu verstehen, die vorzugsweise zwischen 85° und 95° liegen. Die orthogonale Ausrichtung der Rotationsachse gegenüber der Eintrittskante ermöglicht eine möglichst große Kontaktfläche zwischen dem spanenden Werkzeug und der Gasturbinenschaufel, wodurch sich ein homogenes Schliffbild ergibt. Des Weiteren wird durch die orthogonale Ausrichtung ein Verkanten des spanenden Werkzeugs gegenüber der Gasturbinenschaufel verhindert, so dass insgesamt die Prozesssicherheit erhöht wird.

Vorzugsweise ist der Winkel zwischen der Rotationsachse des spanenden Werkzeugs und der Profilsehne der Gasturbinenschaufel kleiner als 20°, weiter vorzugsweise kleiner als 15°. Weiter vorzugsweise ist die Rotationsachse im Wesentlichen parallel zu der Profilsehne ausgerichtet. Unter einer im Wesentlichen parallelen Ausrichtung ist dabei vorzugsweise ein Winkel zwischen der Rotationsachse und der Profilsehne von weniger als 10° zu verstehen, weiter vorzugsweise von weniger als 5°, und insbesondere vorzugsweise von weniger als 2°. Weiter ist es vorteilhaft, wenn eine Abweichung zu der parallelen Ausrichtung in Radialrichtung kleiner ist als die Umfangskomponente der Abweichung. Durch den kleinen Winkel zwischen der Rotationsachse des spanenden Werkzeugs und der Profilsehne der Gasturbinenschaufel ergibt sich der Vorteil, dass die Vorrichtung noch platzsparender eingesetzt werden kann und so auch Gasturbinenschaufeln mit einer engen Beabstandung zueinander bearbeitet werden können.

Da sich die Profilsehne in Abhängigkeit des Radialabstandes ändert, ist die Profilsehne stets durch die Profilschnittebene definiert, an der sich die Vorrichtung befindet. Die Vorrichtung ist damit dafür eingerichtet, über die gesamte radiale Erstreckung der Gasturbinenschaufel die erfindungsgemäße Ausrichtung der Rotationsachse zu der Profilsehne zu ermöglichen.

Erfindungsgemäß ist das spanende Werkzeug durch einen Radienfräser oder Radienschleifkörper gebildet. Dadurch ergibt sich der Vorteil, dass die Gasturbinenschaufel ohne eine aufwändige Bewegungssteuerung durch eine spanende Bearbeitung in eine Soll-Geometrie gebracht werden kann. Vorzugsweise wird der Radienfräser oder -schleifkörper dafür an der zu bearbeitenden Gasturbinenschaufel in Position gebracht; zur Rekonturierung der Gasturbinenschaufel über deren gesamte radiale Erstreckung muss der Radienfräser oder -schleifkörper dann lediglich nach radial innen bzw. außen in einer im Wesentlichen linearen Bewegung bewegt werden. In Abhängigkeit der zu rekonturierenden Fläche, können Radienfräser und/oder -schleifkörper mit verschiedenen Radien verwendet werden, wobei für Triebwerke einer Baureihe auch einheitliche Standard-Radienfräser und/oder Standard-Radienschleifkörper verwendet werden können, welche in einer Serie speziell für die Triebwerke der Baureihe vorgefertigt werden. Der Radienfräser oder -schleifkörper ist vorzugsweise so gegenüber der Gasturbinenschaufel angeordnet, dass er während des spanenden Bearbeitungsvorgangs tangential an der Eintrittskante anliegt.

In einigen Ausführungsformen kann der Radienfräser auch durch einen Radienschleifkörper gebildet sein. Daraus ergibt sich der Vorteil, dass die Oberflächenrauigkeit im Vergleich zu einer Bearbeitung durch den Radienfräser an den bearbeiteten Flächen reduziert werden kann.

In alternativen Ausführungsformen ist das spanende Werkzeug vorteilhaft durch einen Konturfräser oder einen Konturschleifkörper gebildet. Es können so beliebige Geometrien als Resultat der spanenden Bearbeitung entstehen, so dass auch Gasturbinenschaufeln mit komplexen Geometrien bearbeitet werden können. Es sind auch Kombinationen von Radienfräser/Radienschleifkörper mit Konturfräser/Konturschleifkörper denkbar.

Vorzugsweise ist das spanende Werkzeug während der Bearbeitung formstabil, d.h. es weist bei der Bearbeitung vorteilhaft eine vordefinierte und gleichbleibende Form auf. Es wird weiter vorgeschlagen, dass die Geometrie des spanenden Werkzeugs formkorrespondierend zu einer Soll-Geometrie der Gasturbinenschaufel, insbesondere einer Druckseite oder einer Saugseite der Gasturbinenschaufel im Bereich der Eintrittskante ist. Dies ermöglicht es, dass das spanende Werkzeug für eine Bearbeitung der Druck- bzw. Saugseite während des spanenden Bearbeitungsvorgangs nur einmal relativ zu der zu bearbeitenden Gasturbinenschaufel positioniert werden muss. Eine komplexe Steuerungsvorrichtung zur Bewegungsführung des spanenden Werkzeuges entlang einer Soll-Geometrie der Gasturbinenschaufel kann damit entfallen. Durch die zuvor genannten Merkmale ist das spanende Werkzeug gemäß der Erfindung gegenüber solchen Werkzeugen abgrenzbar, die während und infolge der Bearbeitung mindestens teilweise ihre Form ändern, wie beispielsweise Besen.

Vorzugsweise erstreckt sich das spanende Werkzeug in axialer Richtung mindestens über eine Länge, die der Hälfte einer maximalen Profildicke der Gasturbinenschaufel entspricht. Durch diese axiale Erstreckung kann in einem Bearbeitungsschritt ein vorderer Teilbereich der Gasturbinenschaufel bearbeitet werden. Bei gängigen Gasturbinenschaufeln nimmt die Profildicke ausgehend von der Eintrittskante im vorderen Bereich rasch zu, so dass der eintretende Luftmassenstrom unmittelbar auf diesen vorderen Teilbereich nahe der Eintrittskante trifft. Die Effizienz der Gasturbinenschaufel ist damit insbesondere von der Geometrie in diesem Teilbereich der Gasturbinenschaufel abhängig. Durch die axiale Erstreckung des Radienfräsers über mindestens die Hälfte der Profildicke kann erreicht werden, dass der vordere Teilbereich nach der Rekonturierung eine strömungsgünstige Geometrie aufweist.

Weiter ist die Führungsvorrichtung vorzugsweise durch wenigstens ein Abstandselement gebildet, das durch eine Druckkraft an der Eintrittskante anliegt, wobei vorteilhaft durch das wenigstens eine Abstandselement der Abstand zwischen der Eintrittskante und dem spanenden Werkzeug einstellbar ist. Vorzugsweise ist neben einem ersten Abstandselement ein zweites Abstandselement vorgesehen, um eine Führung des spanenden Werkzeugs eindeutig an der Eintrittskante der Gasturbinenschaufel auszurichten. Vorzugsweise ist das spanende Werkzeug dabei zwischen dem ersten und zweiten Abstandselement angeordnet. Die Abstandselemente sind dabei so eingestellt, dass vorzugsweise ein Materialabtrag nur an den konvexen oder konkaven Flächen der Druck- bzw. Saugseite erfolgt. Ein Materialabtrag erfolgt nicht unmittelbar an der Eintrittskante der Gasturbinenschaufel, so dass die Länge der Profilsehne während des spanenden Bearbeitungsvorgangs konstant bleibt. Es ergibt sich daraus der Vorteil, dass die Anzahl der Bearbeitungsvorgänge erhöht werden kann, bevor die Gasturbinenschaufel gewechselt oder instandgehalten werden muss.

Vorzugsweise ist wenigstens ein erstes Auflager zur Ausrichtung des spanenden Werkzeugs gegenüber einer Druckseite oder Saugseite der Gasturbinenschaufel vorgesehen. Durch das Auflager kann eine geeignete Beabstandung des spanenden Werkzeugs von der Druck- bzw. Saugseite der Gasturbinenschaufel erfolgen. Vorzugsweise ist das erste Auflager so gegenüber dem spanenden Werkzeug angeordnet, dass das erste Auflager während des Bearbeitungsvorgangs weniger als 20 mm von der Eintrittskante entfernt auf der Druck- oder Saugseite der Gasturbinenschaufel aufliegt, vorzugsweise weniger als 15 mm und insbesondere vorzugsweise weniger als 10 mm.

Es wird weiter vorgeschlagen, dass neben dem ersten Auflager ein zweites Auflager vorgesehen ist, wobei das zweite Auflager axial hinter bzw. axial beabstandet zu dem ersten Auflager angeordnet ist. Es ergibt sich daraus der Vorteil, dass durch die beiden axial hintereinander angeordneten Auflager der Winkel zwischen der Profilsehne und der Rotationsachse eingestellt werden kann. Dabei kann der Winkel entweder dadurch verstellt werden, indem die Auflager einen identischen Abstand zur Rotationsachse aufweisen und an der gekrümmten Kontur der Gasturbinenschaufel anliegen, so dass durch das Verschieben der Auflager der Abstand zwischen dem Anlagepunkt der Oberfläche und der Profilsehne verändert wird. Alternativ können auch die Abstände der Auflager zu der Rotationsachse verschieden sein, so dass der Winkel zwischen der Rotationsachse und der Profilsehne durch das Verändern des Abstandes zwischen den Auflagern verstellt werden kann. Gemeinsam mit den Abstandselementen kann das spanende Werkzeug gegenüber der Gasturbinenschaufel in einer geeigneten Position angeordnet und in Radialrichtung entlang der Gasturbinenschaufel bewegt werden. Zusätzliche Einrichtungen zur Abstützung, beispielsweise gegenüber dem Triebwerksgehäuse, können so entfallen. Vorzugsweise ist bei dieser Ausführungsform das zweite Auflager so gegenüber dem spanenden Werkzeug angeordnet, dass das zweite Auflager während des Bearbeitungsvorgangs weniger als 20 mm von der Eintrittskante entfernt auf der Druck- oder Saugseite der Gasturbinenschaufel aufliegt, vorzugsweise weniger als 15 mm und insbesondere vorzugsweise weniger als 10 mm. Vorzugsweise liegen das erste und das zweite Auflager in einem Abstand von weniger als 1/3 der Länge der Profilsehne von der Eintrittskante entfernt an der Druck- bzw. Saugseite der Gasturbinenschaufel auf.

Ferner wird vorgeschlagen, dass wenigstens eines der Auflager dazu eingerichtet ist, eine reibkraftarme Bewegung des Auflagers gegenüber der Druckseite oder Saugseite zu ermöglichen. Hierzu kann das Auflager aus einem reibkraftreduzierenden Material, beispielsweise aus Teflon, gefertigt sein. Alternativ ist auch ein kugelförmiges Auflager denkbar, wodurch eine reibkraftarme Bewegung des Auflagers gegenüber der Druck- bzw. Saugseite der Gasturbinenschaufel sowohl in Radial- als auch in Axialrichtung ermöglicht wird.

Bevorzugt ist ein Begrenzungselement zur Begrenzung der Bewegung des spanenden Werkzeugs entlang der Eintrittskante vorgesehen. Vorzugsweise ist das Begrenzungselement so angeordnet, dass eine Bewegung des spanenden Werkzeugs nach radial außen begrenzt wird. Alternativ oder zusätzlich kann ein Begrenzungselement so angeordnet sein, dass es die Bewegung des spanenden Werkzeugs nach radial innen begrenzt. Durch die Begrenzung der Bewegung kann verhindert werden, dass das spanende Werkzeug in Kontakt zu angrenzenden Bauteilen der Gasturbine, z.B. der Innenseite des Gasturbinengehäuses, gerät und diese so beschädigt.

Vorzugsweise ist die Verbindung zwischen der Haltevorrichtung und dem spanenden Werkzeug mit einfachen Mitteln lösbar, so dass wahlweise ein spanendes Werkzeug für die Druckseite und/oder für die Saugseite an der Haltevorrichtung befestigt werden kann. Mit einfachen Mitteln lösbar bedeutet im Kontext dieser Anmeldung, dass das spanende Werkzeug während des Betriebes sicher mit der Haltevorrichtung verbunden ist, jedoch ein Lösen per Hand oder unter Zuhilfenahme von Werkzeugen durch Muskelkraft möglich ist. Es kann so eine einzige Vorrichtung für die spanende Bearbeitung verschiedener Konturen der Gasturbinen verwendet werden.

Weiter vorzugsweise weist die Haltevorrichtung ein erstes spanendes Werkzeug zur Bearbeitung der Druckseite, und ein zweites spanendes Werkzeug zur Bearbeitung der Saugseite auf. Es wird so in einem Bearbeitungsschritt ermöglicht, entweder gleichzeitig - oder je nach Anordnung der spanenden Werkzeuge relativ zueinander - in einem vorbestimmten zeitlichen Abstand, sowohl die Druck- als auch die Saugseite der Gasturbinenschaufel zu bearbeiten. Durch eine solche Anordnung kann sowohl die Rüstzeit als auch die Bearbeitungszeit reduziert werden, was einen effizienteren und kostengünstigeren Rekonturierungsprozess zur Folge hat.

Vorzugsweise wird die Vorrichtung durch die bei einem Ausbau eines Variable Bleed Valves gebildete Öffnung von axial vorne an eine erste Stufe des Hochdruckverdichters geführt. Durch die Öffnung kann die Vorrichtung ohne großen Arbeitsaufwand an einer der Gasturbinen der ersten Stufe des Hochdruckverdichters angeordnet werden. Vorzugsweise sind die sog. Inlet Guide Vanes (IGV) dabei axial ausgerichtet.

Die Erfindung wird im Folgenden anhand bevorzugter Ausführungsformen unter Bezugnahme auf die beigefügten Figuren erläutert. Dabei zeigt:
- Fig. 1: eine Schnittansicht einer Gasturbinenschaufel mit einem Radienfräser an einer Saugseite der Gasturbinenschaufel;
- Fig. 2: eine Schnittansicht einer Gasturbinenschaufel mit einem Radienfräser an einer Druckseite der Gasturbinenschaufel;
- Fig. 3: eine schematische Schnittansicht einer Lagerung des Radienfräsers an einer Gasturbinenschaufel; und
- Fig. 4: eine schematische Schnittansicht einer Vorrichtung während des erfindungsgemäßen spanenden Bearbeitungsprozesses an einer Gasturbinenschaufel.

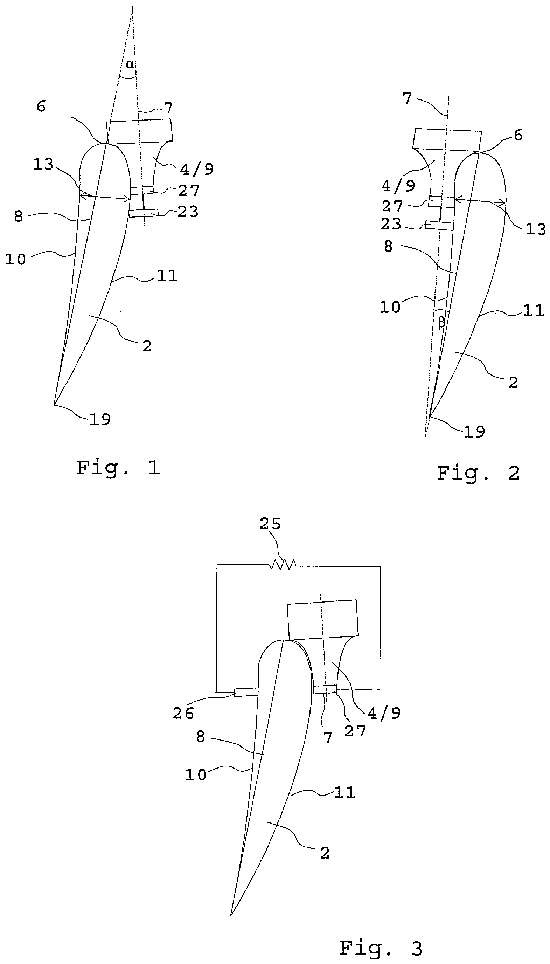

Die Fig. 1 und Fig. 2 zeigen eine aus dem Stand der Technik bekannte Gasturbinenschaufel 2 mit einer Druckseite 10 und einer Saugseite 11, die beispielsweise in einem Kompressor oder einer Turbine einer Gasturbine verbaut ist, wobei es sich dabei um eine Leit- oder um eine Laufschaufel handeln kann. Eine Vorrichtung 1 und das erfindungsgemäße Verfahren lassen sich aufgrund der leichten Zugänglichkeit besonders einfach an der ersten Stufe des Hochdruckverdichters im eingebauten Zustand anwenden; es handelt sich daher bei der in den Fig. 1 bis Fig. 4 dargestellten Gasturbinenschaufel 2 vorzugsweise um die der ersten Stufe des Hochdruckverdichters.

Grundsätzlich besteht jedoch die Möglichkeit, die Vorrichtung 1 und das Verfahren auch bei anderen Gasturbinenschaufeln 2 sowohl im eingebauten als auch im ausgebauten Zustand anzuwenden; die Vorrichtung 1 kann sowohl zur Bearbeitung von Statorals auch von Rotorschaufeln angewendet werden.

In den Fig. 1 bis Fig. 3 ist eine Profilschnittebene der Gasturbinenschaufel gezeigt, die senkrecht zu einer radialen Erstreckung der Gasturbinenschaufel verläuft. Weiter ist eine Profilsehne 8 zu erkennen, die durch eine direkte Verbindungslinie zwischen einer vorderen und einer hinteren Kante 19 der Gasturbinenschaufel 2 in der Profilschnittebene gebildet ist. Die vordere Kante wird hier durch die Eintrittskante 6 gebildet. Weiter ist eine maximale Profildicke 13 der Gasturbinenschaufel 2 dargestellt.

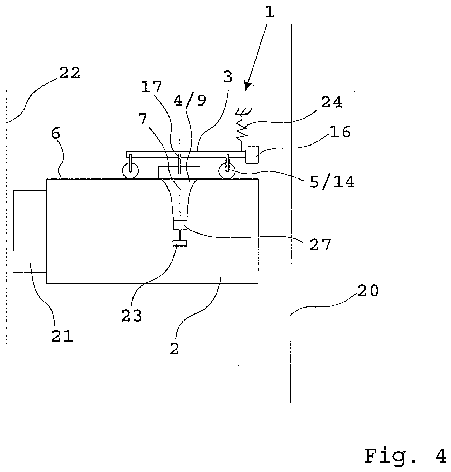

Nachfolgend werden die Richtungsangaben Radialrichtung (radial), Axialrichtung (axial) und Umfangsrichtung verwendet. Diese Angaben beziehen sich auf eine Rotationsache 22 der Gasturbine, die in Fig. 4 dargestellt ist, sofern kein anderer Bezug angegeben ist.

Fig. 4 zeigt eine schematische Schnittansicht der Vorrichtung 1 zum Rekonturieren der Gasturbinenschaufel 2, umfassend eine Haltevorrichtung 3, ein spanendes Werkzeug 4, zwei Führungsvorrichtungen 5 und ein Begrenzungselement 16. Es sei ausdrücklich darauf hingewiesen, dass Fig. 4 als schematische Zeichnung zu verstehen ist und keine tatsächlichen Größenverhältnisse wiedergegeben werden. Die Haltevorrichtung 3 hat die Funktion, das spanende Werkzeug 4 gegenüber der zu bearbeitenden Gasturbinenschaufel 2 zu lagern.

Das spanende Werkzeug 4 ist über eine mit einfachen Mitteln lösbare Verbindung 17 in der Haltevorrichtung 3 drehbar gelagert, so dass das spanende Werkzeug 4 um eine Rotationsachse 7 rotieren kann. Das spanende Werkzeug 4 kann so, je nach zu bearbeitender Geometrie der Gasturbinenschaufel 2, gewechselt werden. Dies ermöglicht es beispielsweise, zunächst mit einem ersten spanenden Werkzeug 4 die Druckseite 10 und anschließend mit einem zweiten spanenden Werkzeug 4 die Saugseite 11 zu bearbeiten. Vorzugsweise handelt es sich bei dem spanenden Werkzeug 4 um einen Radienfräser 9 oder um einen Radienschleifkörper. Der Antrieb des spanenden Werkzeugs 4 erfolgt vorzugsweise elektrisch; alternativ ist auch ein hydraulischer oder pneumatischer Antrieb möglich. Die Drehzahl ist von der Art des spanenden Werkzeugs 4 und dessen Durchmesser abhängig. Vorzugsweise werden als spanende Werkezuge 4 mehrschneidige Fräser oder Schleifkörper verwendet.

Vorzugsweise ist an der Vorrichtung 1 eine Saugeinrichtung vorgesehen, mit der die während des erfindungsgemäßen spanenden Bearbeitungsprozesses anfallenden Späne abgesaugt werden können. Weiter vorzugsweise ist eine Boroskopieeinrichtung vorgehsehen, die dazu dient, den Bearbeitungsvorgang zu steuern und zu überwachen.

Damit die Rekonturierung der Gasturbinenschaufel 2 auch im eingebauten Zustand erfolgen kann, muss eine zuverlässige Positionierung des spanenden Werkzeugs 4 gegenüber der zu bearbeitenden Gasturbinenschaufel 2 sichergestellt werden. Dies ist notwendig, damit die Soll-Geometrie der Gasturbinenschaufel 2 durch den Rekonturierungsprozess bestmöglich erreicht und damit eine Beschädigung angrenzender Bauteile der Gasturbine vermieden werden kann. Um die Positionierung der Vorrichtung 1 gegenüber der Gasturbinenschaufel 2 zu veranschaulichen, ist in Fig. 4 ein Gehäuse 20 der Gasturbine dargestellt. An der radial innen liegenden Seite ist die Gasturbinenschaufel 2 über einen Fuß mit einem Befestigungselement 21 verbunden; die Gasturbinenschaufel 2 rotiert so im Betrieb um die Rotationsache 22. Weiter geht aus der Fig. 4 hervor, dass die Vorrichtung 1 über zwei Führungsvorrichtungen 5 an der Eintrittskante 6 anliegt. Die Führungsvorrichtung 5 wird dabei vorzugsweise durch ein erstes und ein zweites Abstandselement 14 und 15 gebildet und dient dazu, das spanende Werkzeug 4 in einem vorbestimmten Abstand zu der Gasturbinenschaufel 2 zu positionieren. Vorzugsweise wird das erste und das zweite Abstandselement 14 und 15 durch jeweils eine gegenüber der Haltevorrichtung 3 drehbar gelagerte Rolle gebildet. Vorzugsweise hat dabei das zweite Abstandselement 15 die gleiche Größe wie das erste Abstandselement 14, d.h. die Rollen weisen identische Radien auf. Das spanende Werkzeug 4 ist vorzugsweise gegenüber den Abstandselementen 14 und 15 so angeordnet, dass es durch die spanende Bearbeitung nicht zu einer Verkürzung der Länge der Profilsehne 8 kommen kann.

Es ist in einer alternativen Ausführungsform auch möglich, dass die Führungsvorrichtung 5 nicht unmittelbar an der Eintrittskante 6 aufliegt, sondern beispielsweise in einem benachbarten Bereich.

Es ist vorteilhaft, wenn das spanende Werkzeug 4 gegenüber der Druckseite 10 bzw. der Saugseite 11 durch ein erstes Auflager 27 gelagert ist. Vorzugsweise ist neben dem ersten Auflager 27 ein zweites Auflager 23 vorgesehen, mit dem die Winkel α und β eingestellt werden können, wenn das spanende Werkzeug 4 die Druckseite 10 bzw. die Saugseite 11 bearbeitet, siehe Fig. 1 und Fig. 2. Die Winkel α und β ergeben sich durch den Schnitt der Rotationsachse 7 mit der Profilsehne 8 in der Profilschnittebene. Um einen geeigneten Kompromiss zwischen einer zuverlässigen Einstellung der Winkel α sowie β und einer kompakten Bauweise der Vorrichtung 1 zu gewährleisten, beträgt der Abstand in Richtung der Rotationsachse 7 zwischen dem ersten und dem zweiten Auflager 27 und 23 vorzugsweise weniger als 1/2 der Länge der Profilsehne 8, weiter vorzugsweise weniger als 1/3 der Länge der Profilsehne 8 und insbesondere vorzugsweise weniger als 1/5 der Länge der Profilsehne 8. Die Einstellung der Winkel α und β erfolgt vorzugsweise durch die Größe der Auflager 27 und 23, durch die an zwei Punkten der Abstand zwischen der Rotationsachse 7 und der Oberfläche der Druck- bzw. der Saugseite 10 bzw. 11 festgelegt wird. Mit der Größe des Auflagers 27 oder 23 ist dabei der durch das Auflager 27 oder 23 eingestellte Abstand zwischen der Rotationsachse 7 und dem jeweiligen Auflagepunkt an der Druck- bzw. an der Saugseite 10 bzw. 11 gemeint. Je nach Verwendung der Vorrichtung 1 an der Druck- oder an der Saugseite 10 oder 11 kann die Größe der Auflager 27 und 23 variieren. Vorzugsweise weicht die Größe des ersten Auflagers 27 von der Größe des zweiten Auflagers 23 ab. Alternativ besteht auch die Möglichkeit, Auflager 23 und 27 mit identischer Größe zu verwenden, wobei die Veränderung der Winkel α und β dann ebenfalls durch eine Veränderung des Abstandes der Auflager 27 und 23 zueinander erreicht werden kann, wenn die Auflager 27 und 23 an einer gekrümmten Oberfläche der Gasturbinenschaufel 2 anliegen.

Ferner zeigt Fig. 3, dass eine Rekonturierung mit der Vorrichtung 1 stets mit einem Materialabtrag verbunden ist, wobei die Länge der Profilsehne 8 konstant bleibt. Durch die erfindungsgemäße spanende Bearbeitung wird lediglich die Profildicke reduziert. Eine nach dem Rekonturierungsprozess angestrebte Soll-Geometrie der Gasturbinenschaufel 2 ist damit stets abweichend von der ursprünglichen Geometrie der Gasturbinenschaufel 2; dennoch liegt sie in dem vom Hersteller angegebenen Toleranzbereich. Auch bei der in Fig. 3 gezeigten Ausführungsform kann neben dem ersten Auflager 27 auch das zweite Auflager 23 vorgesehen sein.

Über ein Anpresselement 24, das beispielsweise durch ein Federelement gebildet ist, kann sichergestellt werden, dass die Vorrichtung 1 und damit auch das spanende Werkzeug 4 in axialer Richtung zuverlässig im Bereich der Eintrittskante 6 an der Gasturbinenschaufel 2 anliegt. Das Anpresselement 24 ist dabei vorzugsweis e mit der Haltevorrichtung 3 verbunden. Damit die Anpressvorrichtung 24 eine Axialkraft gegenüber der Gasturbinenschaufel 2 aufbringen kann, ist diese an einem in Axialrichtung festen Gasturbinenbauteil, beispielsweise an einem Teil des Gehäuses 20, befestigt. Vorzugsweise erfolgt das Anpressen bzw. das Führen der Vorrichtung 1 per Hand. Alternativ kann eine Abstützung der Vorrichtung 1 über die hintere Kante 19 (Trailing Edge) erfolgen.

Damit die Gasturbinenschaufel 2 über ihre gesamte radiale Erstreckung rekonturiert werden kann, muss die Vorrichtung 1 entlang der Eintrittskante 6 bewegbar sein. Vorzugsweise sind die Abstandselemente 14 und 15, wie bereits vorangehend erläutert, durch Rollen gebildet. Diese sind vorzugsweise so ausgerichtet, dass eine Abrollbewegung in Radialrichtung ermöglicht wird. Weiter ist das Begrenzungselement 16 so an der Haltevorrichtung 3 angeordnet, dass die Bewegung der Vorrichtung 1 nach radial außen durch das Begrenzungselement 16 begrenzt werden kann. Es wird damit sichergestellt, dass das spanende Werkzeug 4 keine angrenzenden Bauteile der Gasturbine beschädigt. Vorzugsweise ist das Begrenzungselement 16 elastisch ausgestaltet, so dass auch die Gefahr einer Beschädigung durch das Begrenzungselement 16 verringert wird. In einer alternativen Ausführungsform der Erfindung kann auch ein zweites Abstandselement vorgesehen sein, durch das die Bewegung der Vorrichtung 1 nach radial innen begrenzt wird.

Die Fig. 1 und Fig. 2 zeigen in einer schematischen Darstellung eine detaillierte Ansicht des spanenden Werkzeugs 4, das hier durch einen Radienfräser 9 gebildet ist. Der Radienfräser 9 ist vorzugsweise kugelgelagert, so dass er verlustarm um die Rotationsachse 7 drehen kann. Alternativ ist auch die Anwendung eines Duo-Radienfräsers oder eines Radienschleifkörpers denkbar.

Vorzugsweise ist der Radius bzw. die Kontur des Radienfräsers 9 formkorrespondierend zu der Soll-Geometrie der Druck- bzw. Saugseite 10 bzw. 11 im Bereich der Eintrittskante 6. Während der Rekonturierung liegt der Radienfräser 9 im Bereich der Eintrittskante 6 an der Gasturbinenschaufel 2 an. Je nach zu bearbeitender Oberfläche wird der Radienfräser 9 dafür an der Druckseite 10 (siehe Fig. 1) bzw. an der Saugseite 11 (siehe Fig. 2) angeordnet. Da die Geometrie der Druck- bzw. Saugseite 10 bzw. 11 voneinander abweicht, müssen dafür verschiedene Radienfräser verwendet werden.

Unabhängig von der bearbeiteten Seite ist der Winkel α bzw. β kleiner als 45°, weiter vorzugsweise kleiner als 30°, insbesondere vorzugsweise kleiner als 15°. Dabei ist die Rotationsachse 7 vorzugsweise orthogonal zu der Eintrittskante 6 ausgerichtet, siehe Fig. 4. Unter einer orthogonalen Ausrichtung zwischen der Rotationsachse 7 und der Eintrittskante 6 ist im Sinne dieser Anmeldung vorzugsweise ein Winkel zwischen 85° und 95° zu verstehen.

Vorzugsweise ist die Rotationsachse 7 des Radienfräsers 9 im Wesentlichen parallel zu der Profilsehne 8 ausgerichtet, siehe Fig. 1 und Fig. 2. Unter einer im Wesentlichen parallelen Ausrichtung zwischen der Rotationsachse 7 und der Profilsehne 8 ist im Kontext dieser Anmeldung eine Abweichung der Rotationsachse 7 von der Profilsehne 8 von weniger als 10° zu verstehen, weiter vorzugsweise von weniger als 5°, und insbesondere vorzugsweise von weniger als 2°. Dabei darf die Abweichung der Rotationsachse 7 von der Profilsehne 8 unabhängig von der Richtung, also weder in Radial- noch in Umfangsrichtung, um mehr als die oben genannten Werte abweichen.

Durch die Verwindung der Gasturbinenschaufeln 2 kann der Winkel α bzw. β in Abhängigkeit von der radialen Positionierung der Vorrichtung 1 an der Gasturbinenschaufel 2 variieren.

In Fig. 3 ist schematisch ein Auflageelement 26 dargestellt, das über ein Anpresselement 25 mit der Haltevorrichtung 3 bzw. mit dem spanenden Werkzeug 4 verbunden ist. Das Anpresselement 25 ist vorzugsweise durch ein Federelement gebildet und dient dazu, das spanende Werkzeug 4 gegen die Druck- bzw. gegen die Saugseite 10 bzw. 11 zu pressen. Das Auflageelement 26 ist vorzugsweise durch ein Rollensystem gebildet, weiter vorzugsweise durch eine Rolle, so dass ein Abrollen in Radialrichtung ermöglicht wird. Das Auflageelement 26 liegt vorzugsweise an der Druck- bzw. Saugseite 10 bzw. 11 an, die dem Radienfräser 9 gegenüberliegt. Es wird so gewährleistet, dass das erste Auflager 27 sowie alternativ auch das zweite Auflager 23 an der gegenüberliegenden Druck- oder Saugseite 10 oder 11 zuverlässig während des gesamten Bearbeitungsprozesses anliegen.

In einer alternativen Ausführungsform ist an der Haltevorrichtung 15 ein erster Radienfräser 9 zur Bearbeitung der Druckseite 10 und ein zweiter Radienfräser 9 zur Bearbeitung der Saugseite 11 vorgesehen. Es können so in einem Bearbeitungsschritt sowohl die Druckseite 10 als auch die Saugseite 11 rekonturiert werden. In diesem Fall ist das Auflageelement 26 vorzugsweise durch einen der Radienfräser 9 gebildet, weiter vorzugsweise durch ein erstes und/oder zweites Auflager 27 und/oder 23, welches diesem Radienfräser 9 zugeordnet ist.

Vorzugsweise wird die Vorrichtung 1 an einer Gasturbinenschaufel angewandt, die noch in der Gasturbine eingebaut ist. Der Zugang zu der Gasturbinenschaufel erfolgt dabei über eine Öffnung, die durch den Ausbau eines sogenannten Variable Bleed Valves (VBVs) entsteht. Vorzugsweise werden die Variable Inlet Guide Vanes (IGVs) axial ausgerichtet. Vorzugsweise wird die Vorrichtung 1 und damit das spanende Werkzeug 4 von axial vorne an die Gasturbinenschaufel gefahren.

## Patentansprüche

1. Verfahren zum Rekonturieren einer Gasturbinenschaufel (2), wobei eine Vorrichtung (1) zum Rekonturieren einer Gasturbinenschaufel (2), umfassend
- eine Haltevorrichtung (3) mit wenigstens einem spanenden Werkzeug (4), und
- eine Führungsvorrichtung (5) zur Führung des spanenden Werkzeugs (4) entlang einer Eintrittskante (6) der Gasturbinenschaufel (2),
zum Rekonturieren verwendet wird, wobei
- das spanende Werkzeug (4) durch eine Rotationsbewegung um eine Rotationsachse (7) Material von der Gasturbinenschaufel (2) abträgt, wobei
- die Rotationsachse (7) mit einer Profilsehne (8) der Gasturbinenschaufel (2) in einer Profilschnittebene, die senkrecht zu einer radialen Erstreckung der Gasturbinenschaufel (2) verläuft, einen Winkel (α, β) einschließt, wobei die Profilsehne (8) die direkte Verbindungslinie zwischen der Eintrittskante (6) und einer hinteren Kante der Gasturbinenschaufel (2) in der Profilschnittebene ist, wobei
- der Winkel (α, β) kleiner als 45° ist, und
- das spanende Werkzeug (4) durch einen Radienfräser (9), einen Radienschleifkörper, einen Konturfräser oder einen Konturschleifkörper gebildet ist.

2. Verfahren nach Anspruch 1, **dadurch gekennzeichnet, dass**
- das spanende Werkzeug (4) während der Bearbeitung formstabil ist.

3. Verfahren nach einem der vorangehenden Ansprüche, **dadurch gekennzeichnet, dass**
- die Rotationsachse (7) orthogonal zu der Eintrittskante (6) ausgerichtet ist.

4. Verfahren nach einem der vorangehenden Ansprüche, **dadurch gekennzeichnet, dass**
- der Winkel (α, β) kleiner oder gleich 25° ist.

5. Verfahren nach einem der vorangehenden Ansprüche, **dadurch gekennzeichnet, dass**
- die Geometrie des spanenden Werkzeugs (4) formkorrespondierend zu einer Soll-Geometrie der Gasturbinenschaufel (2) ist.

6. Verfahren nach einem der vorangehenden Ansprüche, **dadurch gekennzeichnet, dass**
- sich das spanende Werkzeug (4) in axialer Richtung mindestens über eine Länge erstreckt, die der Hälfte einer maximalen Profildicke (13) der Gasturbinenschaufel (2) entspricht.

7. Verfahren nach einem der vorangehenden Ansprüche, **dadurch gekennzeichnet, dass**
- die Führungsvorrichtung (5) wenigstens ein Abstandselement (14, 15) umfasst, das durch eine Druckkraft an der Eintrittskante (6) anliegt, wobei vorzugsweise
- durch das wenigstens eine Abstandselement (14, 15) der axiale Abstand zwischen der Eintrittskante (6) und dem spanenden Werkzeug einstellbar ist.

8. Verfahren nach einem der vorangehenden Ansprüche, **dadurch gekennzeichnet, dass** wenigstens ein Auflager (27) zur Ausrichtung des spanenden Werkzeugs (4) gegenüber einer Druckseite (10) oder Saugseite (11) der Gasturbinenschaufel (2) vorgesehen ist.

9. Verfahren nach Anspruch 8, **dadurch gekennzeichnet, dass**
- neben einem ersten Auflager (27) ein zweites Auflager (23) vorgesehen ist, wobei
- das zweite Auflager (23) axial hinter dem ersten Auflager (27) angeordnet ist.

10. Verfahren nach Anspruch 8 oder 9, **dadurch gekennzeichnet, dass**
- wenigstens eines der Auflager (23, 27) dazu eingerichtet ist, eine reibkraftarme Bewegung des Auflagers (23, 27) gegenüber der Druckseite (10) oder Saugseite (11) in Radialrichtung zu ermöglichen.

11. Verfahren nach einem der vorangehenden Ansprüche, **dadurch gekennzeichnet, dass**
- ein Begrenzungselement (16) zur Begrenzung der Bewegung des spanenden Werkzeugs (4) entlang der Eintrittskante (6) vorgesehen ist.

12. Verfahren nach einem der vorangehenden Ansprüche, **dadurch gekennzeichnet, dass**
- eine Verbindung (17) zwischen der Haltevorrichtung (3) und dem spanenden Werkzeug (4) lösbar ist, so dass wahlweise ein spanendes Werkzeug (4) für die Druckseite (10) oder für die Saugseite (11) an der Haltevorrichtung (3) befestigt werden kann.

13. Verfahren nach einem der vorangehenden Ansprüche, **dadurch gekennzeichnet, dass**
- die Haltevorrichtung (3) ein erstes spanendes Werkzeug (4) zur Bearbeitung der Druckseite (10) und
- ein zweites spanendes Werkzeug (4) zur Bearbeitung der Saugseite (11) aufweist.

14. Verfahren nach einem der vorangehenden Ansprüche, wobei
- die Vorrichtung (1) durch die bei einem Ausbau eines Variable Bleed Valves gebildete Öffnung von axial vorne an eine erste Stufe eines Hochdruckverdichters geführt wird.

## Claims

1. Method for recontouring a gas turbine blade (2), wherein a device (1) for recontouring a gas turbine blade (2), comprising
- a holding device (3) with at least one cutting tool (4), and
- a guide device (5) for guiding the cutting tool (4) along a leading edge (6) of the gas turbine blade (2),
is used for recontouring, wherein
- the cutting tool (4) removes material from the gas turbine blade (2) by means of a rotational movement about an axis of rotation (7), wherein
- the axis of rotation (7) forms an angle (α, β) together with a chord (8) of the gas turbine blade (2) in a profile section plane, which extends perpendicularly to a radial extent of the gas turbine blade (2), wherein the chord (8) is the direct connection line between the leading edge (6) and a trailing edge of the gas turbine blade (2) in the profile section plane, wherein
- the angle (α, β) is less than 45°, and
- the cutting tool (4) is formed of a radial milling cutter (9), a radial grinding wheel, a contour milling cutter or a contour grinding wheel.

2. Method according to claim 1, **characterised in that**
- the cutting tool (4) is dimensionally stable during machining.

3. Method according to any of the preceding claims, **characterised in that**
- the axis of rotation (7) is oriented orthogonally to the leading edge (6).

4. Method according to any of the preceding claims, **characterised in that**
- the angle (α, β) is less than or equal to 25°.

5. Method according to any of the preceding claims, **characterised in that**
- the geometry of the cutting tool (4) corresponds in shape to a desired geometry of the gas turbine blade (2).

6. Method according to any of the preceding claims, **characterised in that**
- the cutting tool (4) extends in an axial direction at least over a length that corresponds to one half of the maximum profile thickness (13) of the gas turbine blade (2).

7. Method according to any of the preceding claims, **characterised in that**
- the guide device (5) comprises at least one spacing element (14, 15), which bears against the leading edge (6) by means of a compressive force, wherein preferably
- the axial distance between the leading edge (6) and the cutting tool is adjustable by means of the at least one spacing element (14, 15).

8. Method according to any of the preceding claims, **characterised in that**
- at least one support (27) for orienting the cutting tool (4) relative to a pressure side (10) or suction side (11) of the gas turbine blade (2) is provided.

9. Method according to claim 8, **characterised in that**
- in addition to a first support (27), a second support (23) is provided, wherein
- the second support (23) is arranged axially behind the first support (27).

10. Method according to either claim 8 or 9, **characterised in that**
- at least one of the supports (23, 27) is designed to enable a low-friction movement of the support (23, 27) relative to the pressure side (10) or suction side (11) in the radial direction.

11. Method according to any of the preceding claims, **characterised in that**
- a limiting element (16) for limiting the movement of the cutting tool (4) along the leading edge (6) is provided.

12. Method according to any of the preceding claims, **characterised in that**
- a connection (17) between the holding device (3) and the cutting tool (4) is releasable, such that a cutting tool (4) for the pressure side (10) or for the suction side (11) can optionally be fastened to the holding device (3).

13. Method according to any of the preceding claims, **characterised in that**
- the holding device (3) comprises a first cutting tool (4) for machining the pressure side (10) and
- a second cutting tool (4) for machining the suction side (11).

14. Method according to any of the preceding claims, **characterised in that**
- the device (1) is guided axially from the front, through the opening formed when a variable bleed valve is removed, to a first stage of a high-pressure compressor.

## Revendications

1. Procédé pour rectifier le contour d'une aube de turbine à gaz (2), dans lequel un dispositif (1) pour rectifier le contour d'une aube de turbine à gaz (2), comprenant
- un dispositif de maintien (3) avec au moins un outil de coupe (4), et
- un dispositif de guidage (5) pour guider l'outil de coupe (4) le long d'un bord d'attaque (6) de l'aube de turbine à gaz (2),
est utilisé pour la rectification de contour, dans lequel
- l'outil de coupe (4) enlève de la matière de l'aube de turbine à gaz (2) par un mouvement de rotation autour d'un axe de rotation (7), dans lequel
- l'axe de rotation (7) forme un angle (α, β) avec une corde de profil (8) de l'aube de turbine à gaz (2) dans un plan de coupe de profil qui s'étend perpendiculairement à une extension radiale de l'aube de turbine à gaz (2), la corde de profil (8) étant la ligne de liaison directe entre le bord d'attaque (6) et un bord de fuite de l'aube de turbine à gaz (2) dans le plan de coupe de profil, dans lequel
- l'angle (α, β) est inférieur à 45°, et
- l'outil de coupe (4) est formé par une fraise à rayon (9), une meule à rayon, une fraise à contour ou une meule à contour.

2. Procédé selon la revendication 1, **caractérisé en ce que**
- l'outil de coupe (4) est dimensionnellement stable pendant l'usinage.

3. Procédé selon l'une des revendications précédentes, **caractérisé en ce que**
- l'axe de rotation (7) est orienté orthogonalement au bord d'attaque (6).

4. Procédé selon l'une des revendications précédentes, **caractérisé en ce que**
- l'angle (α, β) est inférieur ou égal à 25°.

5. Procédé selon l'une des revendications précédentes, **caractérisé en ce que**
- la géométrie de l'outil de coupe (4) correspond en forme à une géométrie de consigne de l'aube de turbine à gaz (2).

6. Procédé selon l'une des revendications précédentes, **caractérisé en ce que**
- l'outil de coupe (4) s'étend dans la direction axiale au moins sur une longueur correspondant à la moitié d'une épaisseur de profil maximale (13) de l'aube de turbine à gaz (2).

7. Procédé selon l'une des revendications précédentes, **caractérisé en ce que**
- le dispositif de guidage (5) comprend au moins un élément d'écartement (14, 15) qui s'appuie contre le bord d'attaque (6) par une force de pression, de préférence dans lequel
- la distance axiale entre le bord d'attaque (6) et l'outil de coupe est réglable au moyen dudit au moins un élément d'écartement (14, 15).

8. Procédé selon l'une des revendications précédentes, **caractérisé en ce qu'**au moins un élément d'appui (27) est prévu pour orienter l'outil de coupe (4) par rapport à un côté pression (10) ou un côté aspiration (11) de l'aube de turbine à gaz (2).

9. Procédé selon la revendication 8, **caractérisé en ce que**
- un deuxième élément d'appui (23) est prévu en plus d'un premier élément d'appui (27), dans lequel
- le deuxième élément d'appui (23) est disposé axialement derrière le premier élément d'appui (27).

10. Procédé selon la revendication 8 ou 9, **caractérisé en ce que**
- au moins un des éléments d'appui (23, 27) est conçu pour permettre un mouvement à faible frottement de l'élément d'appui (23, 27) par rapport au côté pression (10) ou au côté aspiration (11) dans la direction radiale.

11. Procédé selon l'une des revendications précédentes, **caractérisé en ce que**
- un élément de limitation (16) est prévu pour limiter le mouvement de l'outil de coupe (4) le long du bord d'attaque (6).

12. Procédé selon l'une des revendications précédentes, **caractérisé en ce que**
- une liaison (17) entre le dispositif de maintien (3) et l'outil de coupe (4) est amovible, de sorte qu'un outil de coupe (4) pour le côté pression (10) ou pour le côté aspiration (11) peut être fixé au choix sur le dispositif de maintien (3).

13. Procédé selon l'une des revendications précédentes, **caractérisé en ce que**
- le dispositif de maintien (3) présente un premier outil de coupe (4) pour l'usinage du côté pression (10) et
- un deuxième outil de coupe (4) pour l'usinage du côté aspiration (11).

14. Procédé selon l'une des revendications précédentes, dans lequel
- le dispositif (1) est guidé à travers l'ouverture formée lors d'une dépose d'une vanne de décharge variable de l'avant axial vers un premier étage d'un compresseur haute pression.
